(19) Europäisches Patentamt
European Patent Office
Office européen des brevets

(11) EP 0 991 672 B1

(12) **EUROPÄISCHE PATENTSCHRIFT**

(45) Veröffentlichungstag und Bekanntmachung des Hinweises auf die Patenterteilung:
**21.08.2002 Patentblatt 2002/34**

(21) Anmeldenummer: **98937501.9**

(22) Anmeldetag: **18.06.1998**

(51) Int Cl.^7^: **C08F 4/00**, C08F 2/00

(86) Internationale Anmeldenummer:
**PCT/EP98/03699**

(87) Internationale Veröffentlichungsnummer:
**WO 99/000427 (07.01.1999 Gazette 1999/01)**

(54) **VERFAHREN DER RADIKALISCH INITIIERTEN WÄSSRIGEN EMULSIONSPOLYMERISATION ZUR HERSTELLUNG EINER WÄSSRIGEN POLYMERISATDISPERSION**

METHOD FOR AQUEOUS EMULSION POLYMERIZATION INITIATED BY FREE-RADICALS FOR PRODUCING AN AQUEOUS POLYMER DISPERSION

PROCEDE DE POLYMERISATION PAR EMULSION AQUEUSE INDUITE PAR DES RADICAUX POUR LA FABRICATION D'UNE DISPERSION POLYMERE AQUEUSE

(84) Benannte Vertragsstaaten:
**BE DE FR GB IT NL**

(30) Priorität: **27.06.1997 DE 19727502**
**15.08.1997 DE 19735222**

(43) Veröffentlichungstag der Anmeldung:
**12.04.2000 Patentblatt 2000/15**

(73) Patentinhaber: **BASF AKTIENGESELLSCHAFT**
**67056 Ludwigshafen (DE)**

(72) Erfinder:
- **FISCHER, Michael**
  **D-67071 Ludwigshafen (DE)**
- **MORRISON, Bradley, Ronald**
  **D-68167 Mannheim (DE)**
- **SUTORIS, Heinz, Friedrich**
  **D-67227 Frankenthal (DE)**
- **DURANT, Yvon**
  **D-69214 Eppelheim (DE)**

(56) Entgegenhaltungen:
**US-A- 4 581 429** **US-A- 5 322 912**

EP 0 991 672 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Vorliegende Erfindung betrifft ein Verfahren der radikalisch initiierten wäßrigen Emulsionspolymerisation zur Herstellung einer wäßrigen Polymerisatdispersion, bei dem man wenigstens eine ethylenisch ungesättigte Gruppe aufweisende Verbindungen (Monomere) mittels Dispergiermittel in wäßrigem Medium emulgiert und mittels eines radikalischen Polymerisationsinitiators im Beisein eines N-Oxyl-Radikals (eine Verbindung, die wenigstens eine

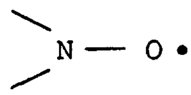

Gruppe aufweist) das sich von einem sekundären Amin ableitet, welches keine Wasserstoffatome an den α-C-Atomen trägt (d.h., die N-Oxyl-Gruppen leiten sich von entsprechenden sekundären Aminogruppen ab), unter Ausbildung einer wäßrigen Polymerisatdispersion polymerisiert. In dieser Schrift sollen vorgenannte N-Oxyl-Radikale als stabile N-Oxyl-Radikale bezeichnet werden.

Wäßrige Polymerisatdispersionen sind fluide Systeme, die als disperse Phase in wäßrigem Dispergiermedium Polymerisatteilchen in stabiler (Lagerstabilität in der Regel ≥ 24 h, normalerweise ≥ 2-3 Tage, meist ≥ 1 Woche) disperser Verteilung befindlich enthalten. Der zahlenmittlere Durchmesser der Polymerisatteilchen beträgt in der Regel 0,01 bis 1 µm.

Ebenso wie Polymerisatlösungen beim verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise unmittelbar als Bindemittel, z.B. für Anstrichfarben oder Massen zum Beschichten von Leder, Anwendung finden.

Häufig wird das dispers verteilte Polymerisat aber auch durch Koagulation abgetrennt und als Bestandteil in Polymer Blends zur Modifizierung der mechanischen Eigenschaften verwendet. Dazu wird das aus der wäßrigen Polymerisatdispersion abgetrennte Polymerisat beispielsweise mit anderen Thermoplasten und gegebenenfalls den üblichen Zuschlagstoffen wie Farbmittel, Pigmente, Gleitmittel, Stabilisatoren oder Füllstoffe, extrudiert.

Die Herstellung wäßriger Polymerisatdispersionen erfolgt meist durch radikalisch initiierte wäßrige Emulsionspolymerisation von wenigstens eine ethylenisch ungesättigte Gruppe aufweisenden Verbindungen bei unterhalb 100°C liegenden Temperaturen. Dabei werden die zu polymerisierenden Monomeren, die überwiegend nur wenig wasserlöslich sind, ohne größeren Aufwand, z.B. durch übliches Rühren, unter Zusatz von Dispergiermittel im wäßrigen Medium emulgiert und durch die Einwirkung radikalischer Polymerisationsinitiatoren polymerisiert.

Bei den radikalischen Polymerisationsinitiatoren handelt es sich üblicherweise um in Wasser lösliche Peroxide, Hydroperoxide und/oder Azoverbindungen, die, oberhalb einer bestimmten Temperatur, die in der Regel ≤ 100°C beträgt, in reaktive Radikale zerfallen, die die Polymerisation auslösen.

Der Begriff Emulsion drückt aus, daß die Monomeren und das Wasser als ein System von zwei nur wenig ineinander löslichen Flüssigkeiten vorliegt, in dem die Flüssigkeiten in mehr oder weniger feiner Verteilung vorliegen. Die Kennzeichnung wäßrige Emulsion drückt aus, daß die wäßrige Phase die kontinuierliche Phase bildet. Zur Herstellung einer wäßrigen Monomerenemulsion bedarf es normalerweise des Zusatzes von Dispergiermitteln (z.B. Ullmanns Encyklopädie der technischen Chemie, Bd. 10, 4. Auflage, Verlag Chemie, Weinheim (1975), S. 449), die die unmittelbare Vereinigung von zwei zufällig zusammenstoßenden Monomerentröpfchen in der wäßrigen Emulsion unterbinden und die Stabilität der resultierenden wäßrigen Polymerisatdispersion gewährleisten.

Infolge des geringen Verteilungsaufwandes besteht die bei der radikalischen wäßrigen Emulsionspolymerisation eingesetzte wäßrige Monomerenemulsion üblicherweise hauptsächlich aus Monomerentröpfchen eines Durchmessers > 1 µm.

Wie alle radikalisch initiierten Polymerisationen von wenigstens eine ethylenisch ungesättigte Gruppe aufweisenden Verbindungen weist auch das Verfahren der radikalisch initiierten wäßrigen Emulsionspolymerisation den Nachteil auf, daß das Molekulargewicht der Polymerketten mit dem Polymerisationsumsatz normalerweise nicht zunimmt und daß die Polymerketten des resultierenden Polymerisats in der Regel kein einheitliches Molekulargewicht aufweisen. D.h., das erhältliche Polymerisat ist bezüglich der Eigenschaft Molekulargewicht in der Regel nicht monodispers, sondern weist üblicherweise einen diesbezüglichen Polydispersitätsindex PDI von ≥ 2 auf (PDI = $\overline{M}_w/\overline{M}_n$, mit $\overline{M}_w$ = gewichtsmittleres Molekulargewicht und $\overline{M}_n$ = zahlenmittleres Molekulargewicht), was insbesondere auf Abbruchreaktionen infolge irreversibler Kombination wachsender freier radikalischer Polymerisatkettenenden zurückgeführt wird.

Ein weiterer Nachteil der radikalisch initiierten wäßrigen Emul-sionspolymerisation besteht darin, daß ein während der Polymerisation durchgeführter Wechsel der zu polymerisierenden Monomeren in der Regel nicht zu segmentierten Copolymerisaten (Blockpolymerisaten) sondern im Normalfall allenfalls zu dispergierten Kern-Schale-Polymerteilchen führt, deren Kern aus der einen und deren Schale aus der anderen Monomerensorte aufgebaut ist, wobei Kern und Schale im wesentlichen nicht chemisch sondern lediglich physikalisch aneinander gebunden sind.

Aus TRIP Vol. 4, No. 6, June 1996, S. 183 ff, US-A 5,322,912, WO 96/24620, US-A-4,581,429, US-A 5,412,047, EP-A 135 280 sowie aus der älteren Anmeldung DE-A 19602539 ist bekannt, daß die Durchführung von radikalisch initiierten Polymerisationen bei oberhalb 100°C liegenden Temperaturen im Beisein eines stabilen (im wesentlichen nicht initiierend wirkenden) N-Oxyl-Radikals eine gewisse Kontrolle der radikalisch initiierten Polymerisation ermöglicht.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letztes bedingt ein mit dem Polymerisationsumsatz (im Idealfall linear) wachsendes mittleres Molekulargewicht des gebildeten Polymerisats mit einem bei 1 liegenden Polydispersitätsindex.

Gemäß US-A 5,322,912, Spalte 10, Zeile 65 ff kommt als Reaktionsmedium für eine solche kontrollierte radikalisch initiierte Polymerisation auch eine Emulsion in Betracht. Weitergehende Angaben zur Durchführung einer solchen radikalisch initiierten Emulsionspolymerisation macht die US-A 5,322,912 nicht. Das gleiche gilt für die DE-A 19602539. Die US-A 5,412,047 empfiehlt in Spalte 18, Zeilen 54 ff für den Fall, daß die radikalisch initiierte Polymerisation in einem mehrphasigen System erfolgt, wie es bei der radikalisch initiierten wäßrigen Emulsionspolymerisation der Fall ist, lediglich, stabile N-Oxyl-Radikale zu verwenden, die in Wasser eine besonders geringe Löslichkeit aufweisen.

Die Verfügbarkeit einer in einfacher Weise durchzuführenden kontrollierten radikalisch initiierten wäßrigen Emulsionspolymerisation zur Herstellung einer wäßrigen Polymerisatdispersion wäre insofern von Vorteil, als sie eine kontrollierte Einstellung des Molekulargewichts des resultierenden, in disperser Verteilung befindlichen, Polymerisats ermöglichen würde. Selbiges bestimmt z.B. Kohäsion und Adhäsion des resultierenden Films der wäßrigen Polymerisatdispersion. Mit zunehmendem Molekulargewicht wächst in der Regel die Kohäsion, ein abnehmendes Molekulargewicht fördert in der Regel die Oberflächenklebrigkeit des Films. Ferner eröffnet sie den unmittelbaren Zugang zu wäßrigen Dispersionen von maßgeschneiderten Blockcopolymerisaten, da die freien radikalischen Polymerisatkettenenden nicht durch Kombination zerstört, sondern lediglich reversibel blockiert werden. D.h., nach Verbrauch einer ersten Monomerensorte kann die Polymerisation bei Zusatz weiterer Monomerensorten fortgesetzt werden.

In Macromolecules 1997, 30, S. 324-326 wird empfohlen, zur Herstellung einer wäßrigen Polymerisatdispersion durch kontrollierte initiierte wäßrige Emulsionspolymerisation letztere so zu realisieren, daß man eine vorgebildete wäßrige Polymerisatdispersion (einen sogenannten Saat-Latex) in ein Polymerisationsgefäß vorlegt und der Vorlage die zu polymerisierenden Monomeren sowie eine hydrophobe Verbindung, die unter der Einwirkung von Wärme in ein stabiles N-Oxyl-Radikal und in einen die Polymerisation initiierenden radikalischen Partner zerfällt, zufügt. Dann überläßt man das Reaktionsgemisch bei Raumtemperatur sich selbst, um sowohl den zu polymerisierenden Monomeren als auch der hydrophoben Verbindung die Diffusion in die Saat-Polymerisatteilchen zu ermöglichen (Quellung). Nach erfolgter Quellung wird durch Temperaturerhöhung (> 100°C) die Polymerisation unter überatmosphärischem Druck durchgeführt. Nachteilig an dieser Verfahrensweise ist, daß sie die Vorabherstellung der vergleichsweise komplizierten hydrophoben Verbindung sowie des äußerst langsamen Quellungsprozesses bedarf. Ferner bedarf es unabdingbar der Vorabherstellung eines Saat-Latex.

Aufgabe der vorliegenden Erfindung war daher, eine vorteilhafter durchzuführende Verfahrensweise einer kontrollierten radikalisch initiierten wäßrigen Emulsionspolymerisation zur Herstellung wäßriger Polymerisatdispersionen zur Verfügung zu stellen.

Demgemäß wurde ein Verfahren der radikalisch initiierten wäßrigen Emulsionspolymerisation zur Herstellung einer wäßrigen Polymerisatdispersion gefunden, bei dem man wenigstens eine ethylenisch ungesättigte Gruppe aufweisende Verbindungen mittels Dispergiermittel in wäßrigem Medium emulgiert und mittels eines radikalischen Polymerisationsinitiators im Beisein eines stabilen N-Oxyl-Radikals polymerisiert, das dadurch gekennzeichnet ist, daß

a) als radikalischer Polymerisationsinitiator ein Peroxid, ein Hydroperoxid und/oder eine Azoverbindung verwendet wird, deren molale Löslichkeit bei 25°C und 1 bar in Wasser größer oder gleich der entsprechenden molalen Löslichkeit von tert.-Butylhydroperoxid in Wasser ist und deren Zerfallstemperatur im Polymerisationsmedium < 100°C beträgt,

b) die radikalisch initiierte wäßrige Emulsionspolymerisation bei einer Temperatur oberhalb von 100°C durchgeführt wird und

c) die radikalisch initiierte wäßrige Emulsionspolymerisation bei Drücken durchgeführt wird, die oberhalb des Dampfdruckes des im Polymerisationsgefäß befindlichen Polymerisationsgemisches liegen.

Als erfindungsgemäß geeignete stabile N-Oxyl-Radikale kommen alle diejenigen in Betracht, die in der EP-A 135 280, der älteren Anmeldung DE-A 19651307, der US-A 5,322,912, der US-A 4,581,429, der WO 96/24620, der US-A 5,412,047 sowie der älteren Anmeldung DE-A 19602539 genannt sind.

Solche geeigneten, sich von einem sekundären Amin ableitenden, stabile N-Oxyl-Radikale sind z.B. jene der allgemeinen Formel I

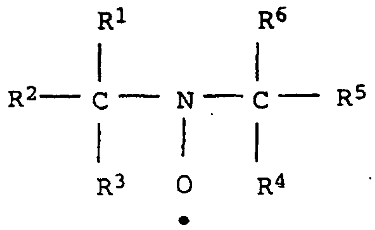

(I),

$R^1$,$R^2$,$R^5$ und $R^6$ = dieselben oder verschiedene gerad- oder verzweigtkettige, gegebenenfalls substituierte Alkylgruppen und

$R^3$ und $R^4$ = dieselben oder verschiedene gerad- oder verzweigtkettige, gegebenenfalls substituierte Alkylgruppen oder

$R^3CNCR^4$ = eine, gegebenenfalls substituierte, zyklische Struktur.

Als Verbindungen I kommen insbesondere jene in Betracht, die in der EP-A 135 280, der älteren Anmeldung DE-A 19651307, der US-A 5,322,912, der US-A 5,412,047, der US-A 4,581,429, der DE-A 16 18 141, CN-A 1052847, US-A 4,670,131, US-A 5,322,960 sowie der älteren Anmeldung DE-A 19602539 genannt sind.

Beispiele dafür sind jene stabilen N-Oxyl-Radikale der allgemeinen Formel I, bei welchen $R^1$, $R^2$, $R^5$ und $R^6$ für (gleiche oder verschiedene) Methyl-, Ethyl-, n-Propyl-,iso-Propyl-, n-Butyl-, iso-Butyl-, tert.-Butyl-, lineares oder verzweigtes Pentyl-, Phenyl- oder substituierte Gruppen hiervon und $R^3$ und $R^4$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, substituierte Gruppen hiervon oder gemeinsam mit CNC die zyklische Struktur

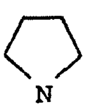

oder

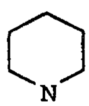

oder

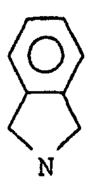

oder

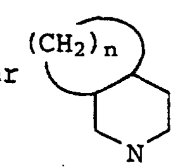

oder

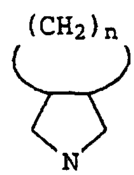

mit n gleich einer ganzen Zahl von 1 bis 10 (häufig 1 bis 6), einschließlich substituierter derartiger zyklischer Strukturen, stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl-1-oxyl-piperidin genannt.

Die stabilen N-Oxyl-Radikale lassen sich aus den entsprechenden sekundären Aminen durch Oxidation, z. B. mit Wasserstoffperoxid, herstellen. In der Regel sind sie als Reinsubstanz darstellbar. Bemerkenswerterweise sind erfindungsgemäß solche stabilen N-Oxyl-Radikale von Vorteil, deren molale Löslichkeit im wäßrigen Polymerisationmedium bei 25°C und 1 bar $\geq 10^{-6}$ mol/kg, bevorzugt $> 10^{-5}$ mol/kg, besonders bevorzugt $> 10^{-4}$ mol/kg und ganz besonders $\geq 10^{-3}$ mol/kg beträgt. In der Regel beträgt vorgenannte Löslichkeit von erfindungsgemäß einzusetzenden stabilen N-Oxyl-Radikalen nicht mehr als $10^{-1}$ mol/kg.

Zu den stabilen N-Oxyl-Radikalen mit erhöhter Löslichkeit in wäßrigem Medium zählen insbesondere carboxylierte, phosphonierte, sulfonierte und/oder hydroxylierte piperidin- oder pyrrolidin-N-Oxyle und Di-N-Oxyle der nachstehenden allgemeinen Formeln II bis IX:

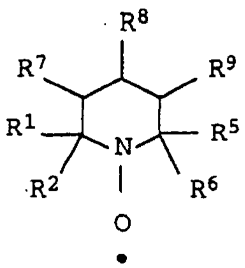
(II),

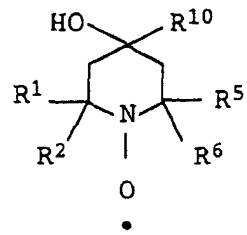
(III),

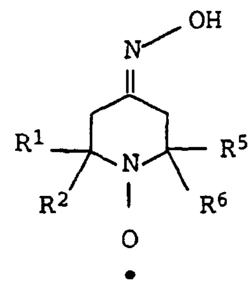
(IV),

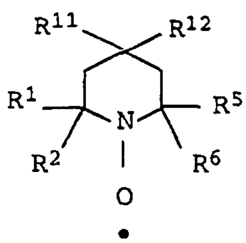
(V),

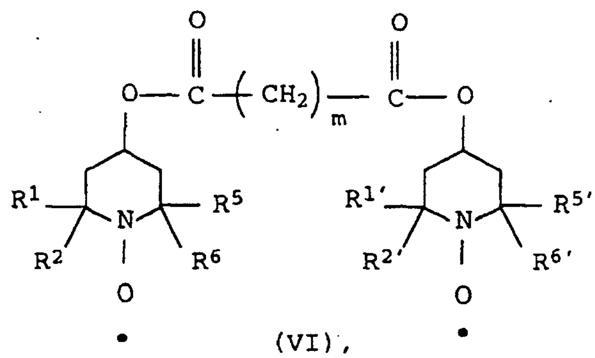
(VI),

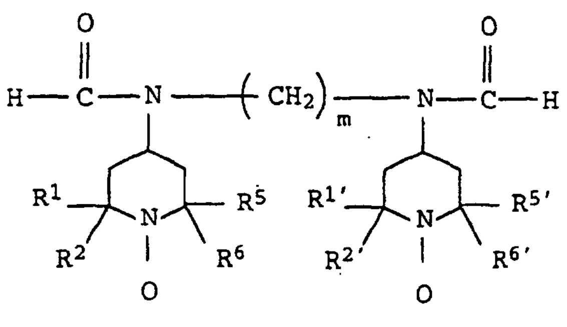
(VII),

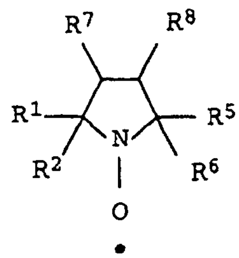
(VIII),

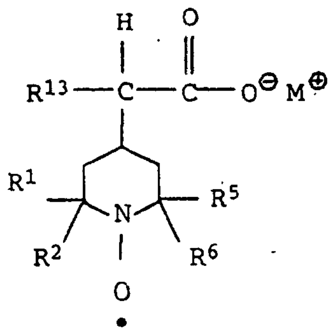
(IX),

mit

m = 2 bis 10,

$R^7$,$R^8$,$R^9$ = unabhängig voneinander

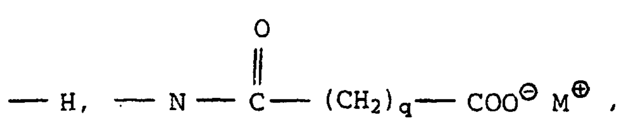

$-NH_2$, 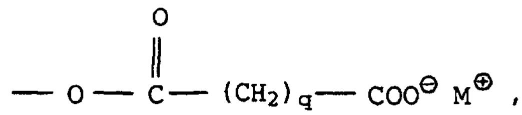 ,

$-COO^{\ominus}M^{\oplus}$, $-SO_3^{\ominus}M^{\oplus}$, $-PO_3^{\ominus}M^{\oplus}$, $-O-PO_3^{2\ominus}M_2^{\oplus}$, $-O-SO_3^{\ominus}M^{\oplus}$, $-OH$,

$-O-(CH_2-CH_2-O)_q-H$

oder

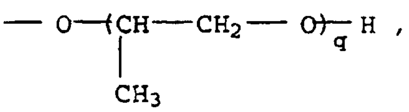 ,

mit der Maßgabe, daß wenigstens einer der vorhandenen Substituenten $R^7$, $R^8$ oder $R^9$ von Wasserstoff verschieden und $M^{\oplus}$ ein Wasserstoff- oder ein Alkalimetallion (insbesondere $K^{\oplus}$ oder $Na^{\oplus}$) ist,

q = eine ganze Zahl von 1 bis 10,

$R^{1'}$,$R^{2'}$,$R^{5'}$,$R^{6'}$ = unabhängig voneinander und unabhängig von $R^1$, $R^2$, $R^5$, $R^6$ dieselben Gruppen wie $R^1$,

$R^{10}$ = $C_1$- bis $C_4$-Alkyl, $-CH=CH_2$, $-C\equiv CH$, $-CN$,

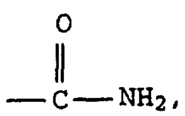, $-COO^{\ominus}M^{\oplus}$, $-COOCH_3$ oder $-COOC_2H_5$,

$R^{11}$ = ein organischer Rest, der wenigstens eine primäre, sekundäre (z.B. $-NHR^1$) oder tertiäre Aminogruppe (z.B. $-NR^1R^2$) oder wenigstens eine Ammoniumgruppe $-N^{\oplus}R^{14}R^{15}R^{16}X^{\ominus}$ aufweist, mit $X^{\ominus} = F^{\ominus}$, $Cl^{\ominus}$, $Br^{\ominus}$, $HSO_4^{\ominus}$, $SO_4^{2\ominus}$, $H_2PO_4^{\ominus}$, $HPO_4^{2\ominus}$ oder $PO_4^{3\ominus}$ und $R^{14}$, $R^{15}$, $R^{16}$ voneinander unabhängige organische Reste (z.B. unabhängig voneinander und unabhängig von $R^1$ dieselben Gruppen wie $R^1$),

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, $-C\equiv CH$,

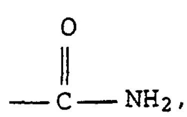, 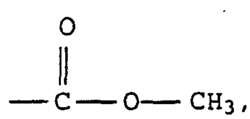, 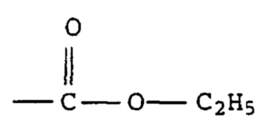

oder hydroxysubstituiertes $C_1$- bis $C_4$-Alkyl (z.B. hydroxyethyl oder hydroxypropyl) oder

$R^{11}$, $R^{12}$ = gemeinsam den Sauerstoff einer Carbonylgruppe und

$R^{13}$ =

$-H$, $-CH_3$ oder 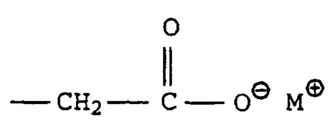 .

Vorzugsweise ist $R^1 = R^2 = R^5 = R^6 = R^{1'} = R^{2'} = R^{5'} = R^{6'} = -CH_3$.

Häufig entspricht bereits die molale Löslichkeit der stabilen N-Oxyl-Radikale in Wasser den erfindungsgemäß für das wäßrige Polymerisationsmedium gewünschten Löslichkeitswerten. Trifft vorgenanntes nicht zu, läßt sich insbesondere dann, wenn das stabile N-Oxyl-Radikal als funktionelle Gruppe eine saure oder basische Gruppe aufweist, der erfindungsgemäß für das wäßrige Polymerisationsmedium als bevorzugt geforderte Löslichkeitswert in an sich bekannter Weise durch Variation des pH-Wertes des wäßrigen Polymerisationsmediums (z.B. Zusatz einer Base, z. B. $NH_3$, KOH oder NaOH, oder Zusatz einer Säure, z.B. HCl, $H_2SO_4$ oder $H_3PO_4$) einstellen.

Als beispielhafte Vertreter erfindungsgemäß geeigneter stabiler N-Oxyl-Radikale seien

4-Hydroxy-2,2,6,6-tetramethyl-1-oxyl-piperidin,
4-Hydroxy-2,6-diphenyl-2,6-dimethyl-1-oxyl-piperidin,
4-Carboxy-2,2,6,6-tetramethyl-1-oxyl-piperidin,
4-Carboxy-2,6-diphenyl-2,6-dimethyl-1-oxyl-piperidin,
3-Carboxy-2,2,5,5-tetramethyl-1-oxyl-pyrrolidin,
3-Carboxy-2,5-diphenyl-2,5-dimethyl-1-oxyl-pyrrolidin und das Natrium- oder Kaliumsalz des Schwefelsäurehalbesters des 4-Hydroxy-2,2,6,6-tetramethyl-1-oxyl-piperidin genannt.

Die Herstellung von 3-Carboxy-2,2,5,5-tetramethyl-1-oxyl-pyrrolidin findet sich z.B. in Romanelli, M.; Ottaviani, M.F.; Martini, G.; Kevan, L., JPCH J: Phys. Chem., EN, 93, 1, 1989, S. 317 - 322.

Die Verbindungen (VI) und (VII) können gemäß US-A 4665185 (z.B. Bsp. 7) sowie DE-A 19510184 erhalten werden.

Weitere geeignete beispielhafte Vertreter sind:

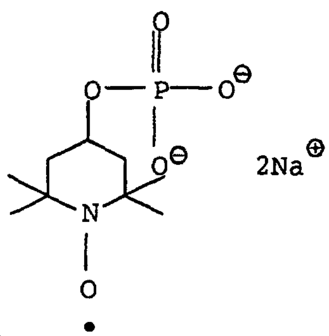

Sunamoto, Junzo; Akiyoshi, Kuzunari, Kihara, Tetsuji; Endo, Masayuki, BCS JA 8, Bull, Chem. Soc. Jpn., EN, 65, 4, 1992, S. 1041 - 1046;

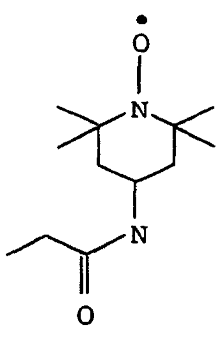

Beilstein Registry Number 6926369 $(C_{11}H_{22}N_3O_2)$;

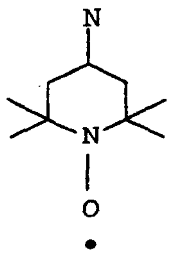

Beilstein Registry Number 6498805 (4-Amino-2,2,6,6-tetramethyl-1-oxyl-piperidin);

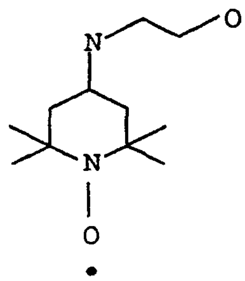

Beilstein Registry Number 6800244 ($C_{11}H_{23}N_2O_2$);

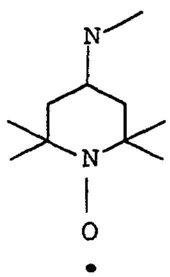

Beilstein Registry Number 5730772 (N-Methyl-4-amino-2,2,6,6-tetra-methyl-1-oxyl-piperidin;

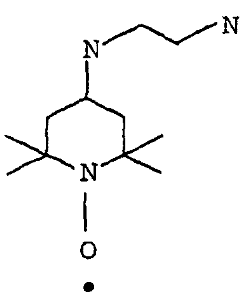

Beilstein Registry Number 5507538 (2,2,6,6-Tetramethyl-4-(2-amino-ethylamino)-1-oxyl-piperidin);

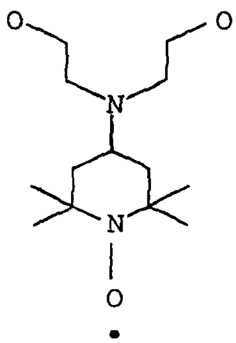

Beilstein Registry Number 4417950 (4<Bis(2-hydroxyethyl)>-amino-2,2,6,6-tetramethyl-1-oxyl-piperidin);

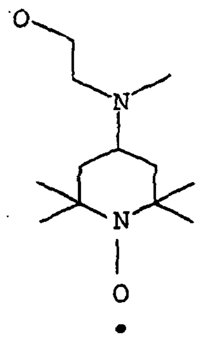

Beilstein Registry Number 4396625 ($C_{12}H_{25}N_2O_2$);

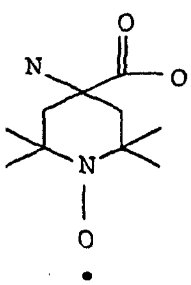

Beilstein Registry Number 4139900 (4-Amino-2,2,6,6-tetramethyl-4-carboxy-1-oxyl-piperidin);

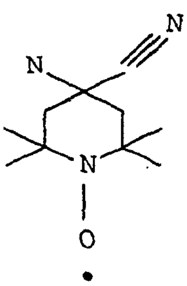

Beilstein Registry Number 4137088 (4-Amino-4-cyano-2,2,6,6-tetramethyl-1-oxyl-piperidin);

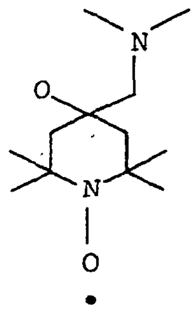

Beilstein Registry Number 3942714 ($C_{12}H_{25}N_2O_2$);

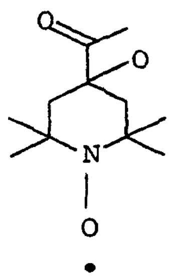

Beilstein Registry Number 1468515 (2,2,6,6-Tetramethyl-4-hydroxy-4-acetyl-1-oxyl-piperidin);

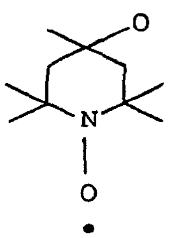

Beilstein Registry Number 1423410 (2,2,4,6,6-Pentamethyl-4-hydroxy-1-oxyl-piperidin);

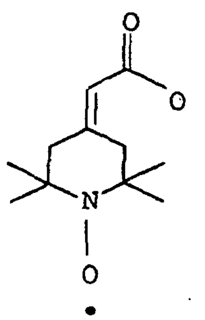

Beilstein Registry Number 6205316 (4-Carboxymethylen-2,2,6,6-tetramethyl-1-oxyl-piperidin);

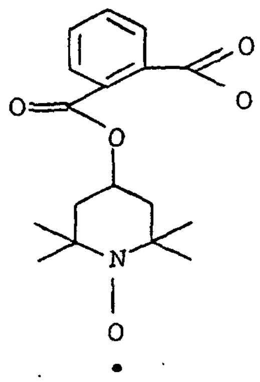

Beilstein Registry Number 1395538 (4-<2-Carboxy-benzoyloxy>-2,2,6,6-tetramethyl-1-oxyl-piperidin);

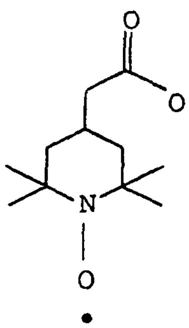

Beilstein Registry Number 3546230 (4-Carboxymethyl-2,2,6,6-tetra-methyl-1-oxyl-piperidin);

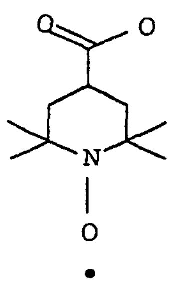

Beilstein Registry Number 3949026 (4-Carboxyl-2,2,6,6-tetra-methyl-1-oxyl-piperidin);

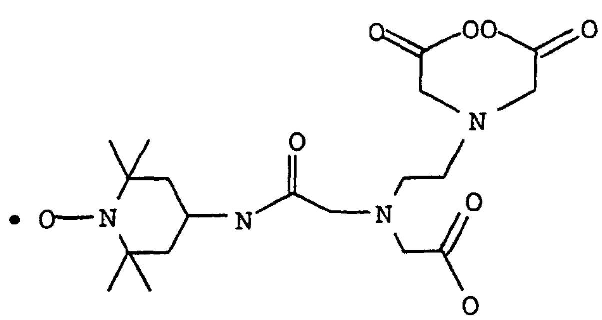

Beilstein Registry Number 4611003 (Ethylendiamintetraessig-säuremono(1-oxy-2,2,6,6-tetramethylpiperidinyl-4-amid);

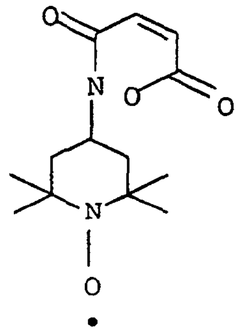

Beilstein Registry Number 5961636
($C_{13}H_{21}N_2O_4$)

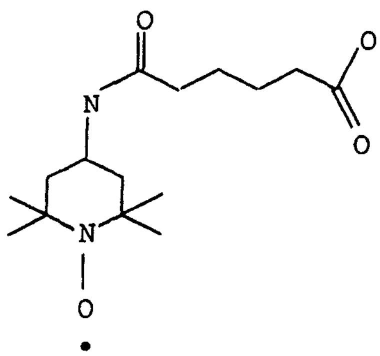

Beilstein Registry Number 5592232
($C_{15}H_{27}N_2O_4$);

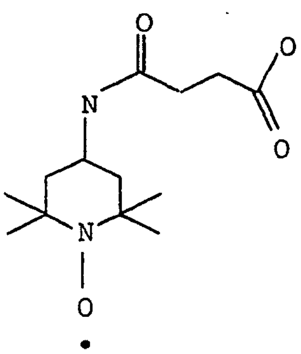

Beilstein Registry Number 5080576
(Bernsteinsäure-N-(2,2,6,6-tetramethyl-1-oxyl-4-piperidinyl)-monoamid);

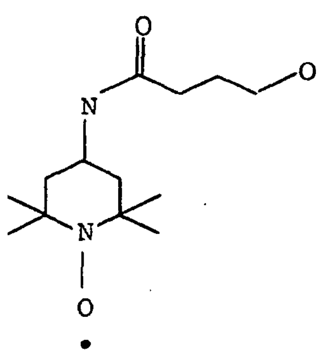

Beilstein Registry Number 5051814
(4-(4-Hydroxybutanoylamino)-2,2,6,6-tetramethyl-1-oxyl-piperidin);

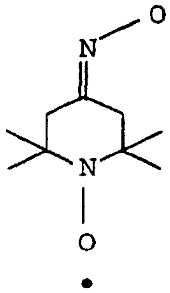

Beilstein Registry Number 4677496 (2,2,6,6-Tetramethyl-4-oximino-1-oxyl-piperidin);

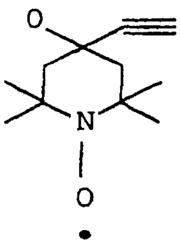

Beilstein Registry Number 1451068 ($C_{11}H_{18}NO_2$);

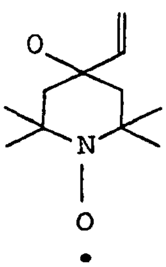

Beilstein Registry Number 1451075 ($C_{11}H_{20}NO_2$);

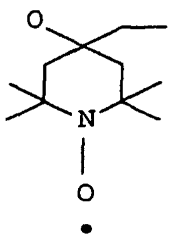

Beilstein Registry Number 1423698 (4-Ethyl-4-hydroxy-2,2,6,6-tetramethyl-1-oxyl-piperidin);

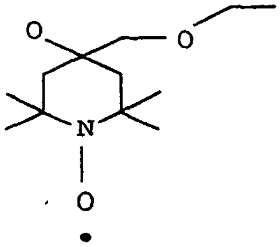

Beilstein Registry Number 5509793 (4-Ethoxymethyl-4-hydroxy-2,2,6,6-tetramethyl-1-oxyl-piperidin);

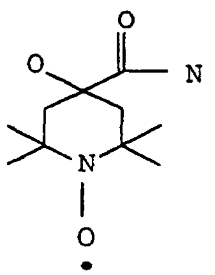

Beilstein Registry Number 3960373 ($C_{10}H_{19}N_2O_3$);

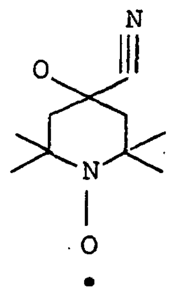

Beilstein Registry Number 4137089 ($C_{10}H_{17}N_2O_2$);

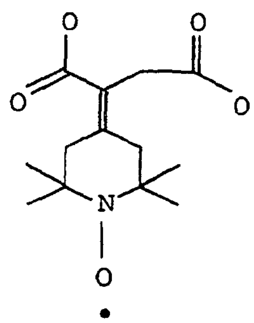

Beilstein Registry Number 3985130 . (2,2,6,6-Tetramethyl-1-oxyl-4-piperidyliden)-bernsteinsäure).

Selbstverständlich können erfindungsgemäß auch Gemische von stabilen N-Oxyl-Radikalen angewendet werden. Es überrascht, daß erfindungsgemäß solche stabilen N-Oxyl-Radikale anwendbar sind, deren molale Löslichkeit bei 25°C und 1 bar im wäßrigen Polymerisationsmedium größer ist als die entsprechende molale Löslichkeit in den zu polymerisierenden Monomeren bzw. in dem zu polymerisierenden Monomerengemisch.

Erfindungsgemäß geeignete radikalische Polymerisationsinitiatoren sind beispielsweise Azoverbindungen wie 4,4'-Azo-bis-cyanovaleriansäure, Hydroperoxide wie tert.-Butylhydroperoxid und/oder Peroxide wie Wasserstoffperoxid oder Peroxodischwefelsäure und deren Alkalimetallsalze (insbesondere $K^{\oplus}$- und $Na^{\oplus}$-Salz). Weitere geeignete radikalische Polymerisationsinitiatoren finden sich in Ullmanns Encyclopädie der Technischen Chemie, Verlag Chemie, Weinheim, 4. Auflage, Band 15, S. 187 ff. Auch können kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure verwendet werden. Ferner eignen sich kombinierte Systeme, die über Reduktionsmittel und Peroxid hinaus, eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)-sulfat/Wasserstoffperoxid.

Bezogen auf die molare Menge an radikalisch zu polymerisierenden Monomeren beträgt die Menge an im erfindungsgemäßen Verfahren eingesetztem radikalischem Polymerisationsinitiator in der Regel $10^{-6}$ bis 2 mol-%, meist $10^{-4}$ bis 1 mol-% und richtet sich in an sich bekannter Weise nach dem gewünschten Molekulargewicht des resultierenden in disperser Verteilung befindlichen Polymerisats.

Das molare Verhältnis zwischen stabilen N-Oxyl-Radikalen und radikalischem Polymerisationsinitiator beträgt im Rahmen des erfindungsgemäßen Verfahrens normalerweise 0,5 bis 5, bevorzugt 0,8 bis 4.

Durch Zugabe von organischen Säuren wie Camphersulfonsäure oder p-Toluolsulfonsäure (US-A 5,322,912) oder durch Zugabe von Dimethylsulfoxid (US-A 5,412,047) bzw. Indolylessigsäure zum Polymerisationsgemisch kann die Polymerisationsgeschwindigkeit des erfindungsgemäßen Verfahrens in der Regel erhöht werden.

Als erfindungsgemäß geeignete Dispergiermittel eignen sich insbesondere die im Rahmen radikalisch initiierter wäßriger Emulsionspolymerisationen üblicherweise eingesetzten Emulgatoren. Dies sind z.B. Blockcopolymere von Ethylenoxid und Propylenoxid, ethoxylierte Mono-, Di- und Tri-Alkylphenole (z.B. EO-Grad: 3 bis 50 u. Alkylrest: $C_4$- bis $C_9$), ethoxylierte Fettalkohole (z.B. EO-Grad: 3 bis 50 u. Alkylrest: $C_8$- bis $C_{36}$), sowie Alkali- und Ammoniumsalze von Alkylsulfaten (z.B. Alkylrest: $C_8$- bis $C_{30}$), von Schwefelsäurehalbestern ethoxylierter Alkanole (z.B. EO-Grad: 4 bis 30 u. Alkylrest: $C_{12}$- bis $C_{30}$) und ethoxylierter Alkylphenole (z.B. EO-Grad: 3 bis 50 u. Alkylrest: $C_4$- bis $C_{15}$), von Alkylsulfonsäuren (z.B. Alkylrest: $C_{12}$- bis $C_{35}$) und von Alkylarylsulfonsäuren (z.B. Alkylrest: $C_9$- bis $C_{35}$).

Weitere geeignete Dispergiermittel sind Verbindungen der allgemeinen Formel X

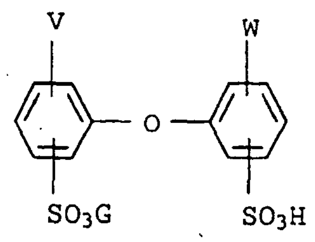

(X) ,

worin V und W Wasserstoff oder $C_4$- bis $C_{14}$-Alkyl bedeuten und nicht gleichzeitig Wasserstoff sind, und G und H Alkalimetallionen und/oder Ammoniumionen sein können. Vorzugsweise bedeuten V, W lineare oder verzweigte Alkylreste mit 6 bis 18 C-Atomen oder Wasserstoff und insbesondere mit 6, 12 und 16 C-Atomen, wobei V und W nicht beide gleichzeitig Wasserstoff sind. G und H sind bevorzugt Natrium, Kalium oder Ammoniumionen, wobei Natrium besonders bevorzugt ist. Besonders vorteilhaft sind Verbindungen X, in denen G und H Natrium, V ein verzweigter Alkylrest mit 12 C-Atomen und W Wasserstoff oder V ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen X sind allgemein bekannt, z.B. aus der US-A 4, 269, 749, und im Handel erhältlich.

Bezogen auf die zu polymerisierenden Monomeren beträgt die erfindungsgemäß zu verwendende Dispergiermittelmenge in der Regel 0,1 bis 10 Gew.-%. Bei Beginn der erfindungsgemäßen radikalisch initiierten wäßrigen Emulsionspolymerisation wird die Emulgatormenge in der Regel als oberhalb der kritischen Micellbildungskonzentration liegend gewählt.

Als wenigstens eine ethylenisch ungesättigte Gruppe aufweisende Monomere kommen z.B. Olefine wie Ethylen oder Propylen, vinylaromatische Monomere wie Styrol, 2-Vinylnaphthalin und 9-Vinylanthracen, substituierte vinylaromatische Monomere wie p-Methylstyrol, α-Methylstyrol, o-Chlorstyrol, p-Chlorstyrol, 2,4-Dimethylstyrol und 4-Vinylbiphenyl, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 20, häufig 1 bis 12, meist 1 bis 8 und besonders häufig 1 bis 4 C-Atome aufweisenden Alkanolen wie insbesondere Acrylsäure- und Methacrylsäuremethyl- -ethyl-, -n-butyl-, -iso-butyl-, -tert.-butyl- und -2-ethylhexylester, Maleinsäuredimethylester oder Maleinsäure-n-butylester, die Nitrile der vorgenannten α,β-monoethylenisch ungesättigten Carbonsäuren wie Acrylnitril und Methacrylnitril sowie $C_{4-8}$-konjugierte Diene wie 1,3-Butadien und Isopren. Die vorgenannten Monomeren bilden in der Regel die Hauptmonomeren, die, bezogen auf die Gesamtmenge der zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0 bis 20 und meist 0 bis 10 Gew.-%, mit einpolymerisiert.

Beispiele für derartige Monomere sind 3 bis 6 C-Atome aufweisende α,β-monoethylenisch ungesättigte Mono- und Dicarbonsäuren sowie deren Anhydride und Amide wie z.B. Acrylsäure, Methacrylsäure, Maleinsäure, Fumarsäure, Itaconsäure, Acrylamid und Methacrylamid, aber auch die Monoester dieser Carbonsäuren mit mehrwertigen Alkoholen wie Hydroxyethylacrylat, Hydroxypropylacrylat, ferner Vinylsulfonsäure sowie N-Vinylpyrrolidon.

Vorzugsweise ist das erfindungsgemäße Verfahren auf die Monomeren Styrol, Vinyltoluol, $C_1$- bis $C_8$-Alkyl (Meth)acrylate, insbesondere n-Butylacrylat, 2-Ethylhexylacrylat oder Methylmethacrylat, und Acrylnitril sowie auf Monomerengemische anwendbar, die zu wenigstens 85 Gew.-% aus vorgenannten Monomeren oder Gemischen der

vorgenannten Monomeren zusammengesetzt sind.

Erfindungsgemäß lassen sich in vergleichsweise kontrollierter Weise sowohl statistische, alternierende als auch segmentierte Copolymerisate, insbesondere Zwei- und Dreiblockcopolymerisate, aus vorgenannten Monomeren im wäßrigen Medium in disperser Verteilung befindlich erzeugen. Von besonderer Bedeutung ist die erfindungsgemäße Herstellung von Poly(n-butylacrylat) sowie von Blockcopolymerisaten die Poly(n-butylacrylat) als wenigstens ein Segment enthalten. Durch entsprechende Steuerung der Zufuhr an zu polymerisierenden Monomeren können auch Gradientenpolymerisate, d.h., Polymerisate mit zu- oder abnehmendem Comonomergehalt entlang der Polymerisatkette hergestellt werden. Bei Dreiblockcopolymerisaten A-Block-B-Block-C-Block können die Blöcke A und C aus gleichen oder verschiedenen Monomeren aufgebaut sein. Die Glasübergangstemperatur der Blöcke kann nach Belieben gewählt werden. Beispielsweise kann die chemische Zusammensetzung der Blöcke A, C so gewählt werden, daß ihre Glasübergangstemperatur ≥ 0°C beträgt. Gleichzeitig kann die chemische Zusammensetzung des Blocks B so gewählt werden, daß dessen Glasübergangstemperatur < 0°C beträgt. Dabei kann der Block B z.B. zu mehr als 70 Gew.-% aus $C_1$- bis $C_8$-(Meth)acrylaten in polymerisierter Form aufgebaut sein. Häufig ist der Block B dabei aus n-Butylacrylat, 2-Ethylhexylacrylat oder deren Gemischen in polymerisierter Form aufgebaut.

Selbstverständlich können als Comonomere auch solche einpolymerisiert werden, die mehr als eine vinylgruppe aufweisen. Als Ergebnis werden vernetzte Polymerisate erhalten. Erfindungsgemäß besonders vorteilhaft ist die Herstellung von wäßrigen Polymerisatdispersionen, deren dispergierte Polymerisatpartikel eine Kern/Schale-Morphologie aufweisen. Die Vorteilhaftigkeit resultiert insbesondere aus einer verbesserten Anknüpfung der Schale an den Kern. Erhältlich ist eine Kern/Schale-Morphologie in der Regel dann, wenn mit der Polymerisationsdauer ein Monomerenwechsel vollzogen und gleichzeitig eine Neubildung von dispergierten Polymerisatpartikeln im wesentlichen unterdrückt wird. Vorzugsweise werden in den Kern vernetzend wirkende Monomere copolymerisiert. Beispielsweise kann der Kern aus Polystyrol oder Polymethylmethacrylat oder aus einem Copolymerisat von Styrol und Acrylnitril aufgebaut sein und eine Glasübergangstemperatur ≥ 25°C aufweisen. Die erste Schale kann beispielsweise aus Polybutadien, Poly-n-alkylacrylat wie Poly-n-butylacrylat oder aus Copolymerisaten mit einer Glasübergangstemperatur Tg < 0°C bestehen. Daran kann sich eine oder mehrere weitere harte Schalen (z.B. aus Polystyrol, Polymethylmethacrylat oder Poly-styrol-acrylnitrilcopolymerisat) mit einer Tg ≥ 25°C anschließen.

Solche Kern-Schale Polymerisatpartikel können nach ihrer Isolierung als Additive zur Modifizierung anderer Kunststoffe eingesetzt werden.

Das Molekulargewicht der erfindungsgemäß erhältlichen, in wäßrigem Medium dispergiert befindlichen, Polymerisate ist in einfacher Weise dadurch einstellbar, daß man zum gewünschten Zeitpunkt die Polymerisationstemperatur absenkt und so die Blockade der wachsenden Polymerisatkettenenden durch die stabilen N-Oxyl-Radikale einfriert. In der Regel tritt dies bei unterhalb 100°C liegenden Temperaturen ein. Durch Temperaturerhöhung kann eine solche Blockade rückgängig gemacht werden. Eine andere Möglichkeit zur Einstellung des Molekulargewichts besteht in der Begrenzung der Menge der zu polymerisierenden Monomeren. Eine irreversible Molekulargewichtseinstellung gestattet der Zusatz von klassischen Molekulargewichtsreglern wie Estern aus Thioglykolsäure und 2-Ethylhexanol oder tert. Dodecylmercaptan. Ihr Zusatz terminiert die wachsenden Polymerisatkettenenden irreversibel und befreit die Polymerisatketten von den stabilen N-Oxyl-Radikalen, die nachfolgend z.B. durch in geeigneter Weise durchzuführende Extraktion eliminiert werden können.

Erfindungsgemäß sind so in einfacher Weise wäßrige Dispersionen von Polymerisaten erhältlich, deren gewichtsmittleres Molekulargewicht $\overline{M}_w$ gezielt Werte von ≥ 1000 bis 250 000, bzw. ≥ 10 000 bis 250 000 beträgt. Die Polydispersitätsindices des Molekulargewichts betragen regelmäßig < 2, üblicherweise < 1,5. Im Fall von Blockcopolymerisaten gilt dies auch für die einzelnen Segmente.

Die Polymerisationstemperatur beträgt erfindungsgemäß mit Vorteil > 100°C bis 180°C. Besonders vorteilhaft sind Temperaturen von 120 bis 150°C. Erfindungsgemäß wesentlich ist, daß der Polymerisationsdruck oberhalb des Dampfdrucks des Polymerisationsgemisches bei der entsprechenden Polymerisationstemperatur liegt. Er kann > 1 bar bis 1000 bar betragen. Mit Vorteil beträgt der Polymerisations-druck 2 bis 20 bar. Ganz besonders vorteilhaft ist ein Polymerisationsdruck von 4 bis 10 bzw. 5 bis 7 bar.

In einfacher Weise lassen sich die gewünschten Druckverhältnisse dadurch einstellen, daß man im Polymerisationsreaktor vor dem Aufheizen des Polymerisationsgemisches auf die gewünschte Polymerisationstemperatur mittels inerten Gasen wie z.B. Methan, $CO_2$, CO, Ar, He oder $N_2$ einen Vordruck einstellt. In typischer Weise kann ein solcher Vordruck z.B. 3 bis 5 bar betragen. Anschließend wird der geschlossene Polymerisationsreaktor auf die Polymerisationstemperatur gebracht. Üblicherweise erfolgt die Durchführung der erfindungsgemäßen radikalisch initiierten wäßrigen Emulsionspolymerisation unter Ausschluß von molekularem Sauerstoff.

Selbstverständlich kann aber auch im Beisein von molekularem Sauerstoff polymerisiert werden. D.h., der gewünschte Vordruck kann z.B. auch mittels Luft eingestellt werden. Aber auch gasförmige Monomere wie Butadien oder Ethylen, gegebenenfalls im Gemisch mit vorgenannten Gasen, können zur Vordruckeinstellung herangezogen werden. Üblicherweise erfolgt die Vordruckeinstellung bei Temperaturen < 100°C. In der Regel wird sie bei Temperaturen von 0°C bis 75°C bzw. 25°C bis 75°C vorgenommen. Häufig wird im Beisein von pH-Puffern wie Natriumbicarbonat polymerisiert.

In besonders einfacher Weise läßt sich das erfindungsgemäße Verfahren so durchführen, daß man alle Bestandteile des Polymerisationsgemisches (einschließlich der wäßrigen Phase) in das gerührte Polymerisationsgefäß vorlegt, den gewünschten Vordruck einstellt und anschließend unter Fortsetzung des Rührens im geschlossenen Polymerisationsgefäß die gewünschte Polymerisationstemperatur einstellt und unter Aufrechterhaltung der Polymerisation bis zum gewünschten Umsatz polymerisiert. Häufig wird die Temperatur auch zunächst auf einen Wert von 50°C bis < 100°C eingestellt, um den Zerfall des radikalischen Polymerisationsinitiators auszulösen. Auf die eigentliche Polymerisationstemperatur wird anschließend erwärmt. Selbstverständlich können die zu polymerisierenden Monomeren dem Polymerisationsgefäß auch stufenund/oder gradientenförmig zugeführt werden. Ebenso können die stabilen N-Oxyl-Radikale und der verwendete radikalische Polymerisationsinitiator vor, während oder nach Beendigung eines Polymerisationsschritts dem Polymerisationsgemisch zugegeben werden. Der Feststoffgehalt der resultierenden wäßrigen Polymerisatdispersion beträgt in der Regel 20 bis 50 Vol.-%. Er kann jedoch bei Bedarf bis zu 75 Vol.-% betragen. Durch chemische Agglomeration und/oder Druckagglomeration läßt sich der Durchmesser der dispergierten Polymerisatteilchen der resultierenden wäßrigen Polymerisatdispersion vergrößern. Zum Zweck der Kontrolle der Durchmesser der in der resultierenden wäßrigen Polymerisatdispersion enthaltenen Polymerisatteilchen können erfindungsgemäß selbstredend auch Saatlatices zugesetzt werden. Dies kann vor oder während der Durchführung der erfindungsgemäßen radikalisch initiierten wäßrigen Emulsionspolymerisation erfolgen. Im Unterschied zum Verfahren des nächstliegenden Standes der Technik bedarf es erfindungsgemäß jedoch keiner Quellung solcher Saatpolymerisatpartikel. Eine Saatfahrweise wird insbesondere dann angewendet werden, wenn man an einer breiten Durchmesserverteilung der resultierenden Polymerisatpartikel interessiert ist. Mit Vorteil wird man erfindungsgemäß als wäßrige Saatpolymerisatdispersion eine solche verwenden, die ebenfalls nach der erfindungsgemäßen Polymerisationsweise hergestellt wurde.

Erfindungsgemäß sind so wäßrige Polymerisatdispersionen erhältlich, deren dispergierte Polymerisatpartikel aus Polymerisat der nachfolgenden Struktur bestehen:

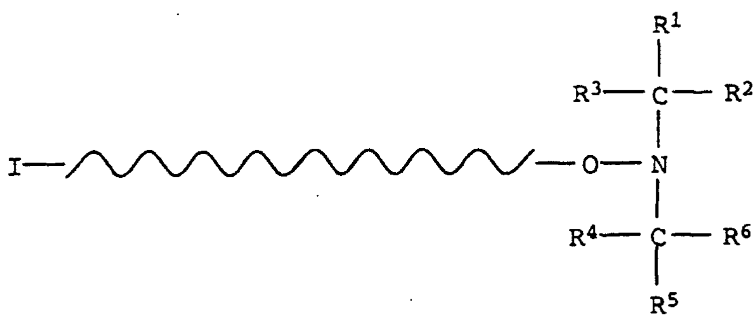

,

mit

I = Rest des radikalischen Polymerisationsinitiators und

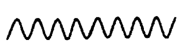 = verzweigtes oder lineares Copolymerisat.

Verwendet man einen radikalischen Polymerisationsinitiator, der beim thermischen Zerfall Bruchstücke mit mehr als einer radikalischen Funktionalität entwickelt, sind auch nachfolgende Strukturen möglich:

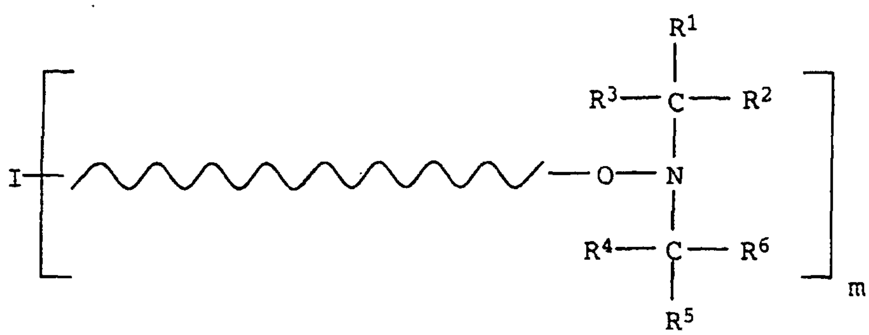

mit m = 1 bis 4.

Ähnliche Strukturen sind möglich, wenn mehrwertige stabile N-Oxyl-Radikale verwendet werden, d.h. Verbindungen, die mehr als eine N-Oxyl-Radikalgruppe aufweisen.

Handelt es sich bei 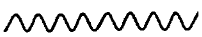 um ein Blockcopolymerisat aus einem hydrophoben und einem hydrophilen Block, sind vorgenannte Strukturen als Dispergiermittel geeignet (vgl. die ältere Anmeldung DE-A 19648029).

Ein Nachteil der erfindungsgemäßen radikalisch initiierten wäßrigen Emulsionspolymerisation ist ihre teilweise vergleichsweise geringe Reaktionsgeschwindigkeit. Vor diesem Hintergrund kann es zweckmäßig sein, die erfindungsgemäße Verfahrensweise mit einer klassischen radikalisch initiierten wäßrigen Emulsionspolymerisation zu kombinieren. Dies kann beispielsweise dadurch erfolgen, daß man klassisch beginnt und anschließend erfindungsgemäß fortfährt oder umgekehrt verfährt.

Im letzteren Fall wird beispielsweise zum als angemessen erachteten Zeitpunkt radikalischer Polymerisationsinitiator im Überschuß (relativ zur enthaltenen Menge an N-Oxyl-Radikal) zugesetzt.

In beiden Fällen ist die Polydispersität des resultierenden Polymerisats erhöht.

Beispiele

Allgemeines

Die in den nachfolgenden Beispielen verwendeten Monomeren und Polymerisationshilfsstoffe wurden ohne weitere Reinigung, d.h., wie bezogen, verwendet. Als stabile N-Oxyl-Radikale wurden 4-Hydroxy-2,2,6,6-tetramethyl-1-oxyl-piperidin der Hüls AG (4-Hydroxy-TEMPO), 2,2,6,6-Tetramethyl-1-oxyl-piperidin der Fa. Aldrich (TEMPO) und das Kaliumsalz des Schwefelsäurehalbesters des 4-Hydroxy-2,2,6,6-tetramethyl-1-oxyl-piperidin, eigene Synthese (TEMPO-O-$SO_3$K), eingesetzt. Die molalen Löslichkeiten der drei genannten stabilen N-Oxyl-Radikale betragen bei 25°C u. 1 atm in Wasser:

| | |
|---|---|
| TEMPO | $6{,}4 \cdot 10^{-5}$ mol/kg |
| 4-Hydroxy-TEMPO | $3{,}25 \cdot 10^{-3}$ mol/kg |
| TEMPO-O-$SO_3$K | $2{,}55 \cdot 10^{-3}$ mol/kg |

Die Molekulargewichte wurden mittels GPC (Gelpermeationschromatographie) bestimmt. Die Eichung erfolgte mittels Polystyrol-Standards.

Herstellung von Kalium-2,2,6,6-tetramethyl-piperidin-1-oxyl-4-sulfat (TEMPO-O-$SO_3$K)

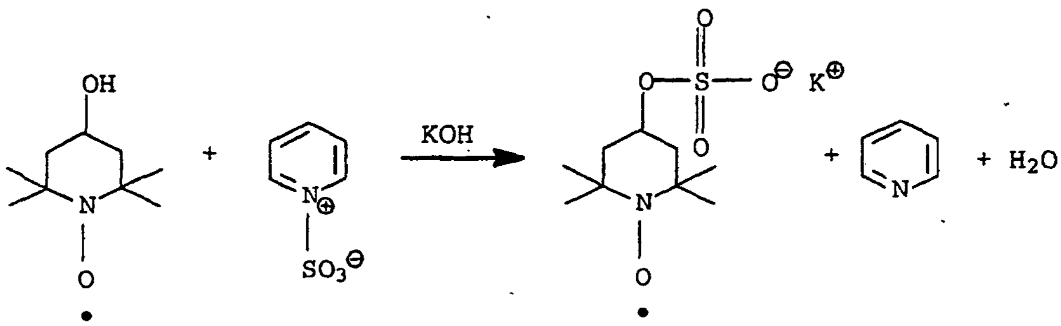


Zu einer Lösung von 18 g (0,1 mol) 4-Hydroxy-TEMPO (der Hüls AG) in 70 ml Acetonitril wurde bei einer Temperatur von 80°C unter Rühren eine Lösung von 15,9 g (0,1 mol) Schwefeltrioxid-Pyridin-Komplex (1 : 1) in 80 ml Acetonitril zugetropft. Anschließend wurde das Reaktionsgemisch 5 h bei Siedetemperatur (unter Rückfluß) und danach noch 12 h bei 25°C gerührt.

Anschließend wurde das Acetonitril bei reduziertem Druck destillativ abgetrennt. Dann wurde eine Lösung von 0,1 mol KOH in 80 ml Wasser zugegeben. Die resultierende wäßrige Lösung wurde sieben mal aufeinanderfolgend mit je 150 ml Essigsäureethylester extrahiert (Abtrennung von gebildetem Pyridin und nicht umgesetzten Ausgangsverbindungen). Die verbleibende wäßrige Phase wurde unter reduziertem Druck eingeengt und der Rückstand anschließend im Hochvakuum getrocknet. Erhalten wurden 20,2 g TEMPO-O-$SO_3$K.

(weitere Synthesemöglichkeiten finden sich z.B. in Melhorn, Rolf Joachim; Packer, Lester, CJCHAG, Can. J. C. EN, 60, 1982, S. 1452 - 1462 und in Sunamoto, Junzo; Akiyoshi, Kazunari, Kihara, Tetsuji; Endo, Masayuki, BCS JA8, Bull. Chem. Soc. Jpn., EN, 65, 4, 1992, S. 1041 - 1046.)

Beispiel 1

In einem gerührten 5 1-Druckkessel wurden bei 25°C 1550 g Wasser, 4,7 g Natriumbicarbonat, 9,3 g des Kaliumsalzes einer $C_{30}$-Alkylsulfonsäure, 3,6 g 4-Hydroxy-TEMPO, 3,8 g Kaliumperoxodisulfat, 281 g Styrol und 94 g Acrylnitril vorgelegt. Dann wurde im Polymerisationsgefäß mittels molekularem Stickstoff ein Vordruck von 4 bar eingestellt und das Polymerisationsgemisch auf 95°C erhitzt. vorgenannte Temperatur wurde 30 min aufrechterhalten. Anschließend wurde die Temperatur auf 120°C erhöht und 12 h bei dieser Temperatur (und einem Druck von ca. 7 bar) polymerisiert. Danach wurde auf 60°C abgekühlt, 200 g n-Butylacrylat zugegeben, auf 120°C erhitzt und weitere 12 h bei 120°C und ca. 7 bar polymerisiert. Die resultierende wäßrige Polymerisatdispersion wies einen Feststoffgehalt von 13 Gew.-% auf und war frei von Koagulat.

In Abhängigkeit von der Gesamtpolymerisationsdauer bei 120°C wurde für vorgenannte Polymerisation das gewichtsmittlere Molekulargewicht $\overline{M}_w$ des gebildeten Polymerisats ermittelt. Die Ergebnisse zeigt die Tabelle 1.

Tabelle 1

| Polymerisat | Gesamtpolymerisationsdauer [120°C, h] | $\overline{M}_w$ |
|---|---|---|
| Poly-styrol-acrylnitril | 4 | 9800 |
| Poly-styrol-acrylnitril | 6 | 13600 |
| Poly-styrol-acrylnitril | 12 | 28000 |
| Poly-styrol-acrylnitril-Poly-butylacrylat | 15 | 31500 |
| Poly-styrol-acrylnitril-Poly-butylacrylat | 18 | 35900 |
| Polystyrol-acrylnitril-Poly-butylacrylat | 24 | 42000 |

Das mit der Polymerisationsdauer zunehmende Molekulargewicht weist die Kontrolliertheit der radikalisch initiierten wäßrigen Emulsionspolymerisation aus.

Vergleichsbeispiel

Beispiel 1 wurde wiederholt, es wurde jedoch kein über dem Dampfdruck des Polymerisationsgemisches liegender Vordruck eingestellt. Nach kurzer Polymerisationsdauer bei 120°C (bei ca. 4 bar) wurde die wäßrige Polymerisatdispersion instabil und koagulierte.

Beispiel 2

In einem gerührten 5 1-Druckkessel wurden bei 25°C 1500 g Wasser, 4,7 g Natriumbicarbonat, 9,3 g Kaliumsalz einer $C_{30}$-Alkylsulfonsäure, 3,6 g 4-Hydroxy-TEMPO, 3,8 g Kaliumperoxodisulfat und 375 g Styrol vorgelegt. Dann wurde im Polymerisationsgefäß mittels molekularem Stickstoff ein Vordruck von 4 bar eingestellt und das Polymerisationsgemisch auf 95°C erhitzt. Vorgenannte Temperatur wurde 30 min aufrechterhalten. Anschließend wurde die Temperatur auf 120°C erhöht und 44 h bei dieser Temperatur (bei ca. 7 bar) polymerisiert. Bei einem Polymerisationsumsatz von 70 Gew.-% wurde die Polymerisation durch abkühlen auf Raumtemperatur abgebrochen. Die resultierende wäßrige Polymerisatdispersion wies einen Feststoffgehalt von 14,5 Gew.-% auf und war frei von Koagulat. In Abhängigkeit von der Gesamtpolymerisationsdauer bei 120°C wurden für vorgenannte Polymerisation das gewichtsmittlere Molekulargewicht $\overline{M}_w$ und der PDI des gebildeten Polymerisats ermittelt.

Die Ergebnisse zeigt die Tabelle 2.

Tabelle 2

| Polymerisat | Gesamtpolymerisationsdauer [120°C, h] | $\overline{M}_w$ | PDI |
|---|---|---|---|
| Polystyrol | 3 | 6800 | 1,45 |
| Polystyrol | 19 | 18900 | 1,34 |
| Polystyrol | 29 | 25300 | 1,42 |
| Polystyrol | 44 | 33000 | 1,46 |

Mit der Polymerisationsdauer nimmt das mittlere Molekulargewicht deutlich zu. Die Molekulargewichtsverteilung bleibt auch bei hohen Polymerisationsumsätzen eng.

Beispiel 3

Beispiel 2 wurde wiederholt, anstelle von 3,6 g 4-Hydroxy-TEMPO wurden jedoch 3,6 g TEMPO verwendet. Nach 44-stündiger Polymerisationsdauer bei 120°C wurde die Polymerisation durch abkühlen auf Raumtemperatur abgebrochen. Der Polymerisationsumsatz betrug 83,5 Gew.-%. Der Feststoffgehalt der resultierenden wäßrigen Polymerisatdispersion betrug 17,2 Gew.-%. Die entsprechenden zeitabhängigen Ergebnisse weist Tabelle 3 aus.

Tabelle 3

| Polymerisat | Gesamtpolymerisationsdauer [120°C, h] | $\overline{M}_w$ | PDI |
|---|---|---|---|
| Polystyrol | 3 | 9800 | 1,31 |
| Polystyrol | 19 | 10800 | 1,29 |
| Polystyrol | 29 | 12600 | 1,33 |
| Polystyrol | 44 | 14300 | 1,65 |

Die Zunahme des gewichtsmittleren Molekulargewichts mit der Polymerisationsdauer ist weniger ausgeprägt als in Beispiel 2. Die Polydispersität bezüglich des Molekulargewichts nimmt bei hohen Polymerisationsumsätzen ebenfalls stärker zu als in Beispiel 2.

Beispiel 4

Beispiel 2 wurde wiederholt, anstelle von 3,6 g 4-Hydroxy-TEMPO wurden jedoch 5,3 g TEMPO-O-$SO_3K$ verwendet. Nach 7-stündiger Polymerisationsdauer bei 120°C wurde die Polymerisation durch abkühlen auf Raumtemperatur abgebrochen. Der Polymerisationsumsatz betrug 98,5 Gew.-%. Der Feststoffgehalt der resultierenden wäßrigen Polymerisatdispersion betrug 20,4 Gew.-%. Die entsprechenden zeitabhängigen Ergebnisse weist Tabelle

4 aus.

Tabelle 4

| Polymerisat | Gesamtpolymerisationsdauer [120°C, h] | $\bar{M}_w$ | PDI |
|---|---|---|---|
| Polystyrol | 0,5 | 247100 | 3,53 |
| Polystyrol | 1,5 | 279000 | 2,96 |
| Polystyrol | 2 | 292800 | 2,91 |
| Polystyrol | 3 | 306700 | 2,76 |
| Polystyrol | 6 | 323500 | 2,61 |
| Polystyrol | 7 | 328000 | 2,72 |

**Patentansprüche**

1. Verfahren der radikalisch initiierten wäßrigen Emulsionspolymerisation zur Herstellung einer wäßrigen Polymerisatdispersion, bei dem wenigstens eine ethylenisch ungesättigte Gruppe aufweisende Verbindungen mittels Dispergiermittel in wäßrigem Medium emulgiert und mittels eines radikalischen Polymerisationsinitiators im Beisein eines stabilen N-Oxyl-Radikals polymerisiert werden, **dadurch gekennzeichnet, daß**

   a) als radikalischer Polymerisationsinitiator ein Peroxid, ein Hydroperoxid und/oder eine Azoverbindung verwendet wird, deren molale Löslichkeit bei 25°C und 1 bar in Wasser größer oder gleich der entsprechenden molalen Löslichkeit von tert.-Butylhydroperoxid in Wasser ist und deren Zerfallstemperatur im Polymerisationsmedium < 100°C beträgt,

   b) die radikalisch initiierte wäßrige Emulsionspolymerisation bei einer Temperatur oberhalb von 100°C durchgeführt wird und

   c) die radikalisch initiierte wäßrige Emulsionspolymerisation bei Drücken durchgeführt wird, die oberhalb des Dampfdrucks des im Polymerisationsgefäß befindlichen Polymerisationsgemisches liegen.

2. Verfahren nach Anspruch 1, **dadurch gekennzeichnet, daß** als stabiles N-Oxyl-Radikal eine Verbindung der allgemeinen Formel I

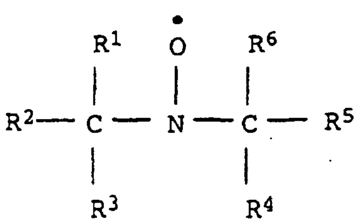

(I),

mit

$R^1,R^2,R^5,R^6$ = dieselbe oder verschiedene gerad- oder verzweigtkettige, gegebenenfalls substituierte Alkylgruppen und

$R^3,R^4$ = dieselben oder verschiedene gerad- oder verzweigtkettige, gegebenenfalls substituierte Alkylgruppen oder

$R^3CNCR^4$ = eine, gegebenenfalls substituierte, zyklische Struktur,

verwendet wird.

3. Verfahren nach Anspruch 1, **dadurch gekennzeichnet, daß** als stabiles N-Oxyl-Radikal eine Verbindung der nachstehenden allgemeinen Formeln II bis IX verwendet wird:

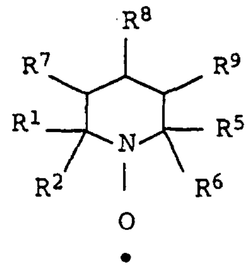

(II),

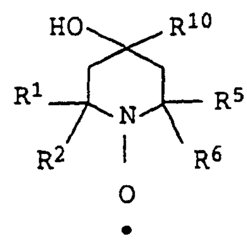

(III),

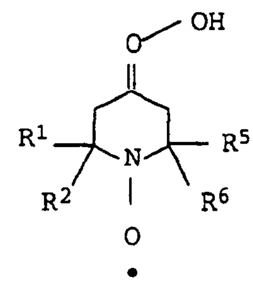

(IV),

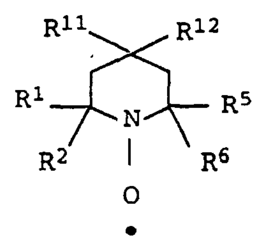

(V),

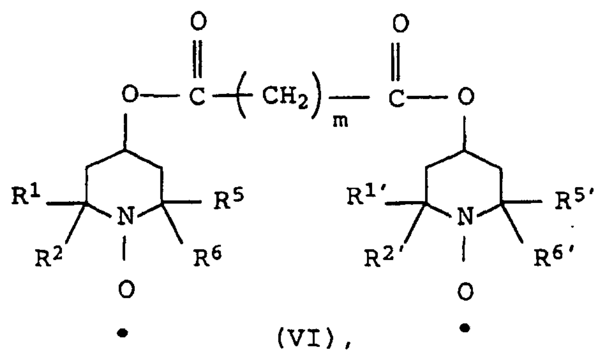

(VI),

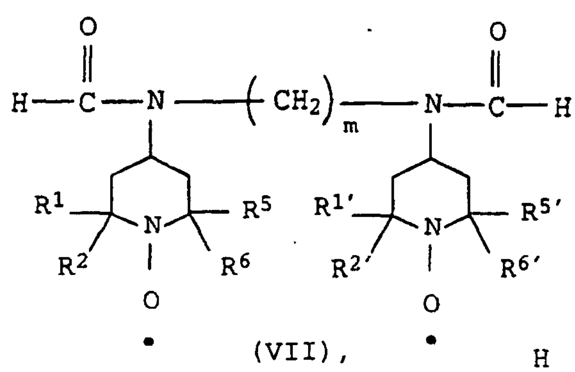

(VII),

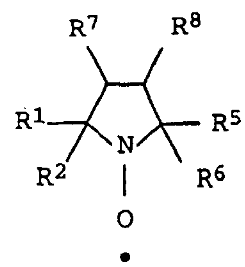

(VIII),

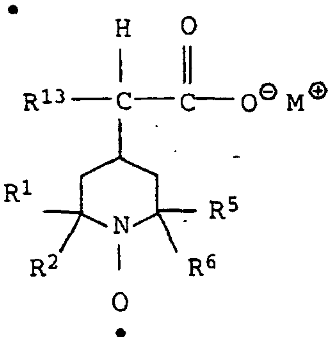

(IX),

mit

m = 2 bis 10,

$R^7$,$R^8$,$R^9$ = unabhängig voneinander

$-H$, 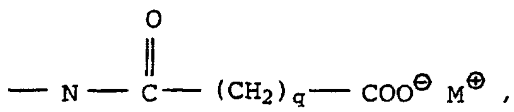

$-NH_2$, 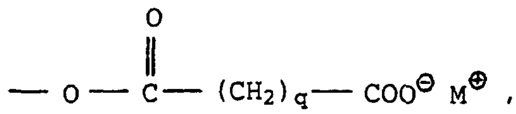

$-COO^{\ominus}M^{\oplus}$, $-SO_3^{\ominus}M^{\oplus}$, $-PO_3^{\ominus}M^{\oplus}$, $-O-PO_3^{2\ominus}M_2^{\oplus}$, $-O-SO_3^{\ominus}M^{\oplus}$, $-OH$,

$-O-(CH_2-CH_2-O)_q-H$

oder

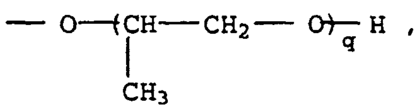

mit der Maßgabe, daß wenigstens einer der vorhandenen Substituenten $R^7$, $R^8$ oder $R^9$ von Wasserstoff verschieden ist,

$M^{\oplus}$ = Wasserstoff- oder ein Alkalimetallion,

q = eine ganze Zahl von 1 bis 10,

$R^1$, $R^2$, $R^5$, $R^6$ = unabhängig voneinander dieselbe oder verschiedene gerad- oder verzweigtkettige, gegebenenfalls substituierte Alkylgruppen,

$R^{1'}$, $R^{2'}$, $R^{5'}$, $R^{6'}$ = unabhängig voneinander und unabhängig von $R^1$, $R^2$, $R^5$, $R^6$ dieselben Gruppen wie $R^1$,

$R^{10}$ = $C_1$- bis $C_4$-Alkyl, $-CH=CH_2$, $-C \equiv CH$, $-CN$,

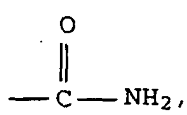 $-COO^{\ominus}M^{\oplus}$, $-COOCH_3$ oder $-COOC_2H_5$,

$R^{11}$ = ein organischer Rest, der wenigstens eine primäre, sekundäre oder tertiäre Aminogruppe oder wenigstens eine Ammoniumgruppe aufweist,

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, $-C \equiv CH$,

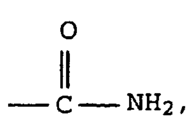 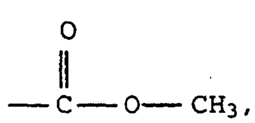 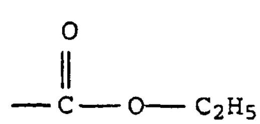

oder

hydroxysubstituiertes $C_1$- bis $C_4$-Alkyl oder

$R^{11}$, $R^{12}$ = gemeinsam den Sauerstoff einer Carbonylgruppe und

$R^{13}$ = — H, — $CH_3$ oder

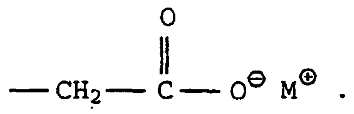

4. Verfahren nach Anspruch 1, **dadurch gekennzeichnet, daß** als stabiles N-Oxyl-Radikal wenigstens ein Vertreter aus der Gruppe umfassend 4-Hydroxy-2,2,6,6-tetramethyl-1-oxyl-piperidin, 4-Hydroxy-2,6-diphenyl-2,6-dimethyl-1-oxyl-piperidin, 4-Carboxy-2,2,6,6-tetramethyl-1-oxyl-piperidin, 4-Carboxy-2,6-diphenyl-2,6-dimethyl-1-oxyl-piperidin, 3-Carboxy-2,2,5,5-tetramethyl-1-oxyl-pyrrolidin, 3-Carboxy-2,5-diphenyl-2,5-dimethyl-1-oxyl-pyrrolidin und das Natrium- sowie das Kaliumsalz des Schwefelsäurehalbesters des 4-Hydroxy-2,2,6,6-tetramethyl-1-oxyl-piperidin verwendet wird.

5. Verfahren nach einem der Ansprüche 1 bis 4, **dadurch gekennzeichnet, daß** als stabiles N-Oxyl-Radikal wenigstens ein solches verwendet wird, dessen molale Löslichkeit im wäßrigen Polymerisationsmedium bei 25°C und 1 bar $\geq 10^{-6}$ mol/kg beträgt.

6. Verfahren nach einem der Ansprüche 1 bis 4, **dadurch gekennzeichnet, daß** als stabiles N-Oxyl-Radikal wenigstens ein solches verwendet wird, dessen molale Löslichkeit im wäßrigen Polymerisationsmedium bei 25°C und 1 bar $\geq 10^{-3}$ mol/kg beträgt.

7. Verfahren nach einem der Ansprüche 1 bis 6, **dadurch gekennzeichnet, daß** als stabiles N-Oxyl-Radikal wenigstens ein solches verwendet wird, dessen molale Löslichkeit im wäßrigen Polymerisationsmedium bei 25°C und 1 bar größer als die entsprechende molale Löslichkeit in den zu polymerisierenden Monomeren ist.

8. Verfahren nach einem der Ansprüche 1 bis 7, **dadurch gekennzeichnet, daß** als radikalischer Polymerisationsinitiator Peroxodischwefelsäure und/oder eines ihrer Alkalimetallsalze mitverwendet wird.

9. Verfahren nach einem der Ansprüche 1 bis 8, **dadurch gekennzeichnet, daß** die zu polymerisierenden Monomeren zu wenigstens 85 Gew.-% aus Monomeren der Gruppe umfassend Styrol, vinyltoluol, $C_1$- bis $C_8$-Alkyl(meth) acrylate und Acrylnitril zusammengesetzt sind.

10. Verfahren nach einem der Ansprüche 1 bis 9, **dadurch gekennzeichnet, daß** im Verlauf der Polymerisation wenigstens ein Wechsel der zu polymerisierenden Monomeren vollzogen wird.

11. Verfahren nach einem der Ansprüche 1 bis 10, **dadurch gekennzeichnet, daß** die Polymerisationstemperatur > 100 bis 180°C beträgt.

12. Verfahren nach einem der Ansprüche 1 bis 11, **dadurch gekennzeichnet, daß** der Polymerisationsdruck 2 bis 20 bar beträgt.

13. Verfahren nach einem der Ansprüche 1 bis 12, **dadurch gekennzeichnet, daß** man das Polymerisationsgemisch bei einer unterhalb 100°C liegenden Temperatur ins Polymerisationsgefäß vorlegt, bei dieser Temperatur einen oberhalb des Dampfdruckes des Polymerisationsgemisches liegenden Druck einstellt und anschließend das geschlossene Polymerisationsgefäß auf die oberhalb 100°C liegende Polymerisationstemperatur erwärmt und polymerisiert.

14. Wäßrige Polymerisatdispersion, erhältlich nach einem Verfahren gemäß einem der Ansprüche 1 bis 13.

**Claims**

1. A process of free-radically initiated aqueous emulsion polymerization for preparing an aqueous polymer dispersion, where compounds having at least one ethylenically unsaturated group are emulsified in an aqueous medium by means of dispersants and are free-radically polymerized in the presence of a stable N-oxyl radical, which comprises

   a) using as free-radical polymerization initiator a peroxide, a hydroperoxide and/or an azo compound whose molal solubility at 25°C and 1 bar in water is greater than or equal to the corresponding molal solubility of tert-butyl hydroperoxide in water and whose dissociation temperature in the polymerization medium is < 100°C,

   b) conducting the free-radically initiated aqueous emulsion polymerization at more than 100°C, and

   c) conducting the free-radically initiated aqueous emulsion polymerization at pressures which are above the vapor pressure of the polymerization mixture present within the polymerization vessel.

2. A process as claimed in claim 1, wherein the stable N-oxyl radical used is a compound of the formula I

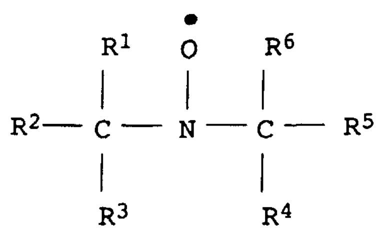

(I),

where

| | |
|---|---|
| $R^1, R^2, R^5, R^6$ = | the same or different straight- or branched-chain, substituted or unsubstituted alkyls and |
| $R^3, R^4$ = | the same or different straight- or branched-chain, substituted or unsubstituted alkyls, or |
| $R^3CNCR^4$ = | a substituted or unsubstituted cyclic structure. |

3. A process as claimed in claim 1, wherein the stable N-oxyl radical used is a compound of one of the following formulae II to IX:

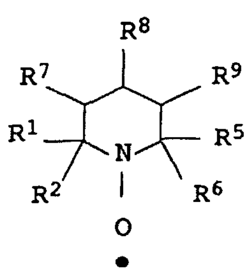

(II),

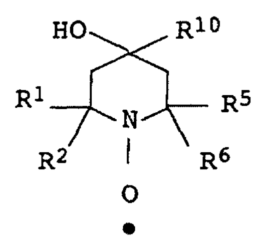

(III),

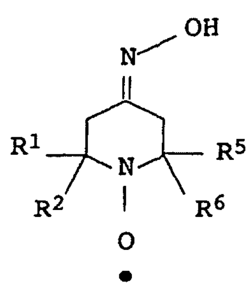

(IV),

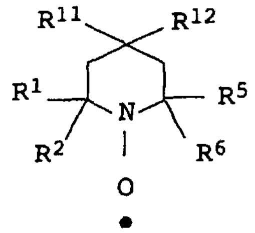

(V),

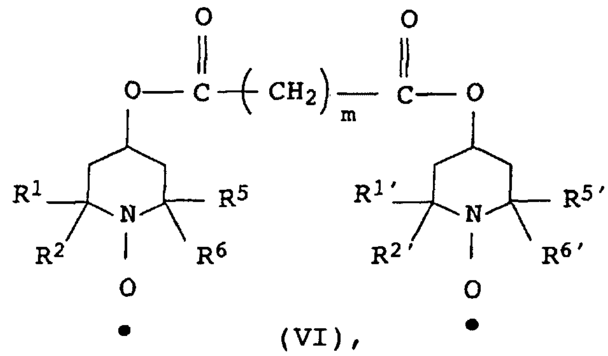

(VI),

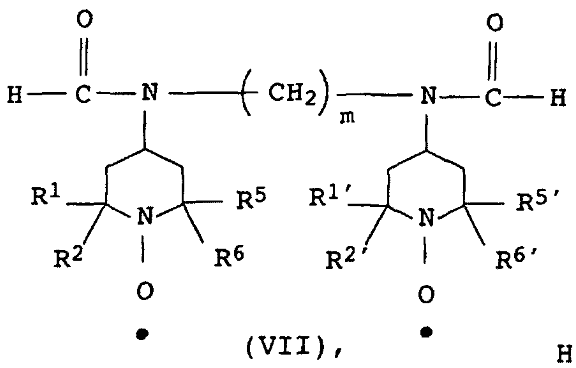

(VII),

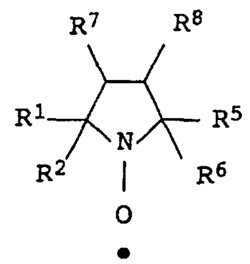

(VIII),

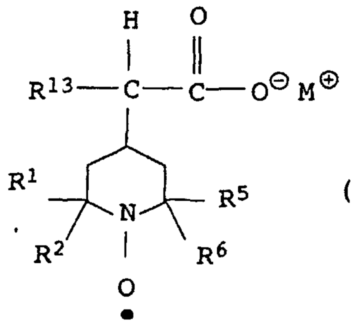

(IX),

where

m = from 2 to 10,

$R^7, R^8, R^9$ = independently of one another

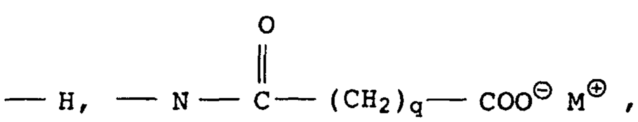

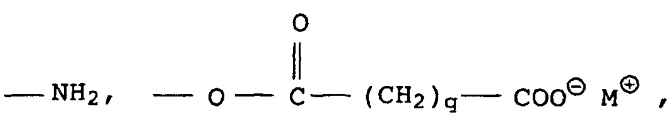

$-COO^{\ominus}M^{\oplus}$, $-SO_3^{\ominus}M^{\oplus}$, $-PO_3^{\ominus}M^{\oplus}$, $-O-PO_3^{2\ominus}M_2^{\oplus}$, $-O-SO_3^{\ominus}M^{\oplus}$, $-OH$,

$-O-(CH_2-CH_2-O)_q-H$

oder

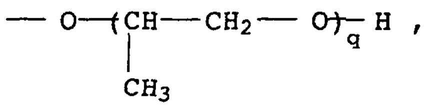

with the proviso that at least one of the substituents $R^7$, $R^8$ and $R^9$ present is different from hydrogen

$M^{\oplus}$ = a hydrogen ion or an alkali metal ion,

q = an integer from 1 to 10,

$R^1,R^2,R^5,R^6$ = independently of one another the same or different straight- or branched-chain, substituted or unsubstituted alkyls,

$R^{1'},R^{2'},R^{5'},R^{6'}$ = independently of one another and independently of $R^1$, $R^2$, $R^5$ and $R^6$ the same groups as $R^1$,

$R^{10}$ = $C_1$-$C_4$-alkyl, $-CH=CH_2$, $-C\equiv CH$, -CN,

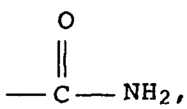 $-COO^{\ominus}M^{\oplus}$, $-COOCH_3$ or $-COOC_2H_5$,

$R^{11}$ = an organic radical with at least one primary, secondary or tertiary amino group or at least one ammonium group,

$R^{12}$ = independently of $R^{11}$ the same groups as $R^{11}$ or -H, -OH, $C_1$-$C_4$-alkyl, $-COO^{\ominus}M^{\oplus}$, $-C\equiv CH$,

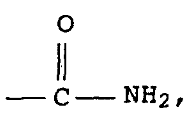 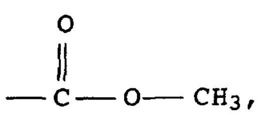 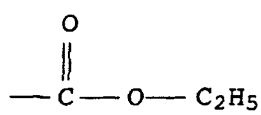

or hydroxy-substituted $C_1$-$C_4$-alkyl or

$R^{11}$, $R^{12}$ = together the oxygen of a carbonyl group and

$R^{13}$ = $-H$, $-CH_3$ or

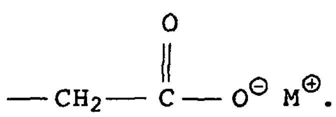

**4.** A process as claimed in claim 1, wherein the stable N-oxyl radical used is at least one representative from the group consisting of 4-hydroxy-2,2,6,6-tetramethyl-1-oxylpiperidine, 4-hydroxy-2,6-diphenyl-2,6-dimethyl-1-oxylpiperidine, 4-carboxy-2,2,6,6-tetramethyl-1-oxylpiperidine, 4-carboxy-2,6-diphenyl-2,6-dimethyl-1-oxylpiperidine, 3-carboxy-2,2,5,5-tetramethyl-1-oxylpyrrolidine, 3-carboxy-2,5-diphenyl-2,5-dimethyl-1-oxylpyrrolidine and the sodium or potassium salt of the sulfuric monoester of 4-hydroxy-2,2,6,6-tetramethyl-1-oxylpiperidine.

**5.** A process as claimed in any of claims 1 to 4, wherein the stable N-oxyl radical used is at least one whose molal solubility in the aqueous polymerization medium at 25°C and 1 bar is $\geq 10^{-6}$ mol/kg.

**6.** A process as claimed in any of claims 1 to 4, wherein the stable N-oxyl radical used is at least one whose molal solubility in the aqueous polymerization medium at 25°C and 1 bar is $\geq 10^{-3}$ mol/kg.

**7.** A process as claimed in any of claims 1 to 6, wherein the stable N-oxyl radical used is at least one whose molal solubility in the aqueous polymerization medium at 25°C and 1 bar is greater than the corresponding molal solubility in the monomers to be polymerized.

**8.** A process as claimed in any of claims 1 to 7, wherein a free-radical polymerization initiator additionally used is peroxodisulfuric acid and/or one of its alkali metal salts.

**9.** A process as claimed in any of claims 1 to 8, wherein the monomers to be polymerized are composed to the extent of at least 85% by weight of monomers from the group consisting of styrene, vinyltoluene, $C_1$-$C_8$-alkyl (meth) acrylates and acrylonitrile.

**10.** A process as claimed in any of claims 1 to 9, wherein there is at least one change of the monomers to be polymerized in the course of the polymerization.

**11.** A process as claimed in any of claims 1 to 10, wherein the polymerization temperature is > 100 to 180°C.

**12.** A process as claimed in any of claims 1 to 11, wherein the polymerization pressure is from 2 to 20 bar.

**13.** A process as claimed in any of claims 1 to 12, wherein the polymerization mixture is charged to the polymerization vessel at a temperature below 100°C, at this temperature a pressure above the vapor pressure of the polymerization mixture is established, and then the closed polymerization vessel is heated to the polymerization temperature which is above 100°C, and polymerization is carried out.

**14.** An aqueous polymer dispersion obtainable by a process as claimed in any of claims 1 to 13.

**Revendications**

**1.** Procédé de polymérisation en émulsion aqueuse à initiation radicalaire pour la préparation d'une dispersion polymère aqueuse, où l'on émulsifie dans un milieu aqueux des composés présentant au moins un groupe éthyléniquement insaturé, au moyen d'un auxiliaire de dispersion, et on polymérise au moyen d'un initiateur de polymérisation radicalaire, en présence d'un radical N-oxyle stable, **caractérisé en ce que**

a) on utilise en tant qu'initiateur de polymérisation radicalaire un peroxyde, un hydroperoxyde et / ou un composé azoïque dont la solubilité molale à 25°C et 1 bar dans l'eau est supérieure ou égale à la solubilité molale correspondante de l'hydroperoxyde de tert.-butyle dans l'eau et dont la température de décomposition dans le milieu de polymérisation est <100°C,
b) on entreprend la polymérisation en émulsion à initiation radicalaire à une température supérieure à 100°C et
c) on entreprend la polymérisation en émulsion à initiation radicalaire à des pressions supérieures à la pression de vapeur du mélange de polymérisation se trouvant dans le réacteur de polymérisation.

**2.** Procédé selon la revendication 1, **caractérisé en ce que** l'on utilise comme radical N-oxyle stable un composé de la formule générale I

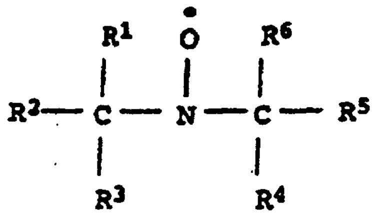
(I),

avec

| | |
|---|---|
| $R^1$, $R^2$, $R^5$, $R^6$ = | identiques ou différents, sont des radicaux alkyle à chaîne linéaire ou ramifiée, éventuellement substitués et |
| $R^3$, $R^4$ = | identiques ou différents, sont des radicaux alkyle à chaîne linéaire ou ramifiée, éventuellement substitués ou |
| $R^3CNCR^4$ = | une structure cyclique éventuellement substituée. |

**3.** Procédé selon la revendication 1, **caractérisé en ce que** l'on utilise comme radical N-oxyle stable un composé des formules

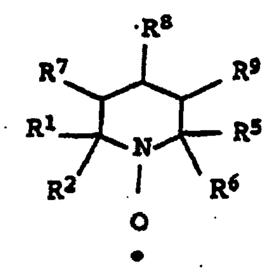
(II),

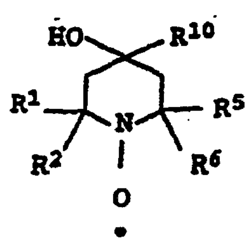
(III),

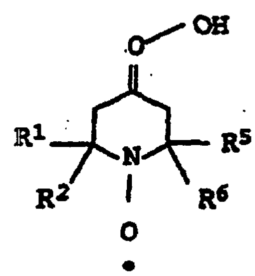
(IV),

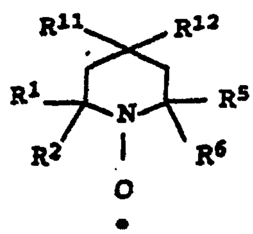
(V),

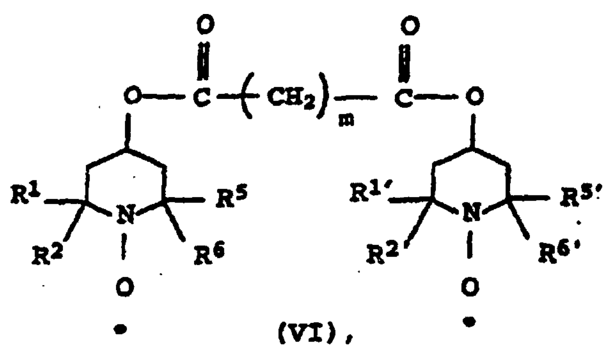
(VI),

générales II à IX ci-après,

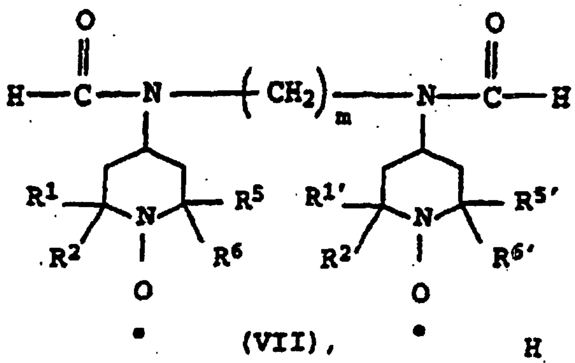

(VII),

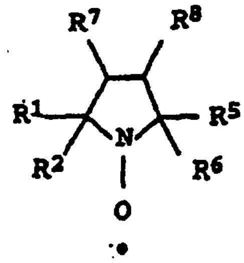

(VIII),

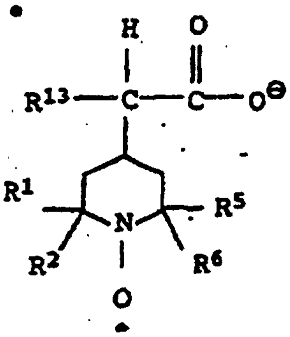

(IX),

avec

m= 2 à 10,

$R^7$, $R^8$, $R^9$ = indépendamment les uns des autres

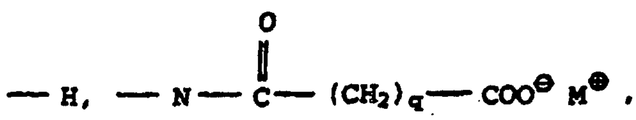

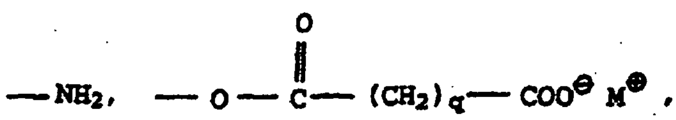

$— COO^{\ominus} M^{\oplus}$, $— SO_3^{\ominus} M^{\oplus}$, $— PO_3^{\ominus} M^{\oplus}$, $— O — PO_3^{2\ominus} M_2^{\oplus}$, $— O — SO_3^{\ominus} M^{\oplus}$, — OH,

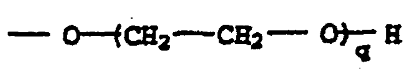

ou

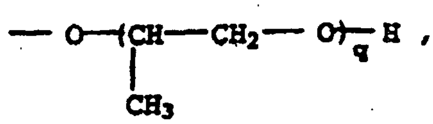

avec la condition qu'au moins un des substituants $R^7$, $R^8$ ou $R^9$ présents soit différent de

l'hydrogène,

$M^{\oplus}$ = de l'hydrogène ou un ion de métal alcalin,

q = un nombre entier de 1 à 10,

$R^1$, $R^2$, $R^5$, $R^6$ = indépendamment les uns des autres, des radicaux alkyle identiques ou différents, à chaîne linéaire ou ramifiée, éventuellement substitués,

$R^{1'}$, $R^{2'}$, $R^{5'}$, $R^{6'}$ = indépendamment les uns des autres et indépendamment de $R^1$, $R^2$, $R^5$, $R^6$, les mêmes radicaux que $R^1$,

$R^{10}$ = radical alkyle en $C_1$ à $C_4$, $-CH = CH_2$, $-C \equiv CH_3$, -CN, $-COO^{\ominus}M^{\oplus}$,

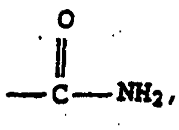

$-COOCH_3$ ou $-COOC_2H_5$,

$R^{11}$ = un reste organique, qui présente au moins un groupe amino primaire, secondaire ou tertiaire ou au moins un groupe ammonium,

$R^{12}$ = indépendamment de $R^{11}$, le même groupe de $R^{11}$ ou -H, -OH, alkyle en $C_1$ à $C_4$, $-COO^-M^+$, $- C \equiv CH$,

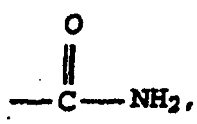 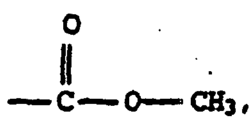 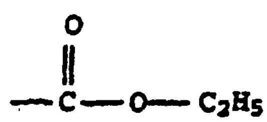

alkyle en $C_1$ à $C_4$ hydroxysubstitué ou bien

$R^{11}$, $R^{12}$ = sont ensemble l'oxygène d'un groupe carbonyle et

$R^{13}$ = —H, —$CH_3$ ou

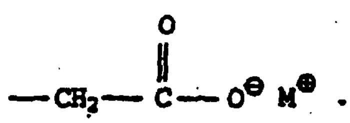

**4.** Procédé selon la revendication 1, **caractérisé en ce que** l'on utilise comme radical N-oxyle stable au moins un représentant du groupe comportant la 4-hydroxy-2,2,6,6-tétraméthyl-1-oxyl-pipéri-dine, la 4-hydroxy-2,6-diphényl-2,6-diméthyl.-1-oxyl-pipéridine, la 4-carboxy-2,2,6,6-tétraméthyl-1-oxyl-pipéridine, la 4-carboxy-2,6-diphényl-2,6-diméthyl-1-oxyl-pipéridine, la 3-carboxy-2,2,5,5-tétraméthyl-1-oxyl-pyrrolidine, la 3-carboxy-2,5-diphényl-2,5-diméthyl-1-oxyl-pyrrolidine et le sel de sodium et de potassium du semi-esters d'acide sulfurique de la 4-hydroxy-2,2,6,6-tétraméthyl-1-oxyl-pipéridine.

**5.** Procédé selon l'une des revendications 1 à 4, **caractérisé en ce que** l'on utilise comme radical N-oxyle stable au moins un dont la solubilité molale dans le milieu de polymérisation aqueux à 25°C et 1 bar est $\geq 10^{-6}$ moles/kg.

**6.** Procédé selon l'une des revendications 1 à 4, **caractérisé en ce que** l'on utilise comme radical N-oxyle stable au moins un dont la solubilité molale dans le milieu de polymérisation aqueux à 25°C et 1 bar est $\geq 10^{-3}$ moles/kg.

**7.** Procédé selon l'une des revendications 1 à 6, **caractérisé en ce que** l'on utilise comme radical N-oxyle stable au moins un dont la solubilité molale dans le milieu de polymérisation aqueux à 25°C et 1 bar est supérieure à la solubilité molale correspondante dans les monomères à polymériser.

**8.** Procédé selon l'une des revendications 1 à 7, **caractérisé en ce que** l'on utilise comme initiateur de polymérisation radicalaire de l'acide peroxodisulfurique et / ou conjointement l'un de ses sels de métal alcalin.

**9.** Procédé selon l'une des revendications 1 à 8, **caractérisé en ce que** les monomères à polymériser sont composés à au moins 80% en poids de monomères du groupe comprenant le styrène, le vinyltoluène, des (méth)acrylates d'alkyle en $C_1$ à $C_8$ et l'acrylonitrile.

**10.** Procédé selon l'une des revendications 1 à 9, **caractérisé en ce que**, dans le cours de la polymérisation, au moins un changement des monomères à polymériser est accompli.

**11.** Procédé selon l'une des revendications 1 à 10, **caractérisé en ce que** la température de polymérisation est > 100 à 180°C.

**12.** Procédé selon l'une des revendications 1 à 11, **caractérisé en ce que** la pression de polymérisation est de 2 à 20 bar.

**13.** Procédé selon l'une des revendications 1 à 12, **caractérisé en ce que** l'on charge le mélange de polymérisation dans le réacteur de polymérisation à une température inférieure à 100°C, qu'à cette température on ajuste une pression supérieure à la pression de vapeur du mélange de polymérisation et qu'ensuite on chauffe le réacteur de polymérisation à la température de polymérisation supérieure à 100°C et on opère la polymérisation.

**14.** Dispersion polymère aqueuse, que l'on peut obtenir par un procédé selon l'une des revendications 1 à 13.